# EUROPEAN PATENT APPLICATION

(11) **EP 1 988 130 A2**
(43) Date of publication of application: **05.11.2008**
(21) Application number: 08008150.8
(22) Date of filing: 29.04.2008
(51) Int. Cl.: C09D 1/08, C09D 163/00, C08G 59/50

(54) **Two-part waterborne epoxy coating composition and method**

(30) Priority: 01.05.2007 US 742827
(71) Applicant: Tnemec Company, Inc., North Kansas City MO 64116 (US)
(72) Inventor: Briand, Remi, Overland Park Kansas 66213 (US); Duncan, J. Alisa, Parkville, Missouri 64152 (US); Floriot, Yves, Montreal, Quebec H1G-5S5 (CA); McGreal, Jennifer S., Kansas City, Missouri 64131 (US)
(74) Representative: Manasse, Uwe

(57) **Abstract**

A waterborne coating composition including a waterborne epoxy coating with hydraulic cement, which is capable of a thin initial application. The coating composition may be made, stored and transported as a two-part composition, where each part is a pourable liquid. The waterborne epoxy composition cures under normal conditions and adheres to surfaces including masonry, concrete and metal.

## Description

### CROSS REFERENCE TO RELATED APPLICATIONS

This Application is a continuation-in-part and claims priority benefit of earlier-filed Non-Provisional Application Serial No. 11/018,644, filed December 20, 2004. The identified earlier-filed application is hereby incorporated by reference into the present Application.

### FIELD OF THE INVENTION

This invention relates to non-structural coating compositions, or paints, and, more particularly, to waterborne epoxy coating compositions and methods for using such compositions.

### BACKGROUND OF THE INVENTION

Epoxy resin based paint compositions are used to coat surfaces to protect against corrosion and other forms of wear and tear caused by use and the environment. The types of surfaces coated include concrete, metal, and other surfaces. Effective coating compositions are prized not only for the quality of protection, but also for easy and efficient transportation, storage, and application. Thus, a good coating composition will not only protect the surface, but also be easy to apply and quick to cure.

The use of epoxy compositions containing volatile organic solvents has fallen out of favor even though these compositions provide exceptional anti-corrosion protection. The organic solvent based compositions are environmentally unfriendly and their use has been curtailed. Solvent free epoxy coatings often require sophisticated, non-standard equipment for application.

Other epoxy paint compositions provide good protection if applied at the recommended thickness. This recommended thickness requires multiple coats and each coat must be cured or set before another coat may be applied. Each additional coat requires additional labor, which increases the cost of application. Other coats may be applied at greater initial thickness, but require more time to set up. Coatings applied at greater initial thicknesses may also introduce flaws caused by voids from evaporation of volatile components during the curing process.

The combination of an epoxy resin and hydraulic cement in a structural composition containing aggregates, such as sand and/or gravel, has been used previously to create concrete-like compositions suitable for overlaying concrete surfaces, bonding units of masonry structure, forming pre-cast concrete articles, and filing gaps or voids in masonry structures or earth formations. For example, prior products include hydraulic cement based compositions with an epoxy resin, used as "mortars," "toppings," "overlays," or "grouts" to top-coat concrete surfaces, fasten anchoring means in boreholes, well sealing, and other structural purposes. These compositions use a small portion of epoxy resin to enhance the aggregate binding characteristics of a hydraulic cement composition, and the final compositions are thick like concrete and resemble concrete. These are generally two-component compositions having a dry-mix component and a wet-mix component which are combined to form the final composition for application to surfaces in thick films, typically much greater than 20 mils. Other compositions have used an epoxy resin to bind aggregate, such as sand or fine gravel, to form a concrete type composition. Such compositions are prized for their structural integrity, however, they are incapable of forming the durable thin film protective coatings obtainable with epoxy resin based paints.

### BRIEF SUMMARY OF THE INVENTION

There is, therefore, provided in the practice of the invention a novel waterborne non-structural fluid coating composition, which is epoxy based and includes hydraulic cement, for reduced initial thickness application, and which provides for a quicker application at a reduced cost. The substantially aggregate-free waterborne epoxy coating composition broadly includes an epoxy resin, a hydraulic cement powder, a curing agent and water.

In an embodiment, the coating composition is prepared by mixing two preblended liquid components; one component containing a liquid epoxy resin and hydraulic cement powder; and the other component containing an amine-based curing agent and water. The epoxy resin containing component may also include additives, such as a non-reactive diluent, a reactive diluent, an organosilicon adhesion promoter, a pigment, hollow spheres, dispersants, leveling agents, a rheology modifier, or other materials. The amine-based curing agent containing component may also include additives, such as a pigment, a cement plasticizer, a non-reactive diluent, a water-based latex resin, a defoamer, a corrosion inhibitor, dispersants, leveling agents, a rheology modifier, colorants, or other materials.

Accordingly, it is an object of the present invention to provide an improved two-part waterborne epoxy paint or non-porous coating composition capable of providing improved protection to a substrate.

### DETAILED DESCRIPTION

The waterborne epoxy composition broadly includes an epoxy resin, hydraulic cement powder, an amine-based curing agent, and water. The composition may be enhanced with additives, including a non-reactive diluent, a reactive diluent, an organosilicon adhesion promoter, a pigment, hollow spheres, a cement plasticizer, a water-based latex resin, defoamers, a corrosion inhibitor, dispersants, rheology modifiers, leveling agents, colorants, or other materials. Each element of the general formula will be discussed in detail below, followed by several embodiments of the composition and the method of production and application.

The epoxy resin may be liquid, solid or semi-solid. The epoxy resin functions as the curable component of one part of the two-part epoxy coating composition. In one embodiment, the epoxy resin may consist of any one of bisphenol A, bisphenol F, epoxy phenol novolac, epoxy cresol novolac, naphthalene epoxy, or tertiary butyl cathecol epoxy. Another epoxy may be used besides those listed here, although these are preferred. In exemplary embodiments, the epoxy resin is a liquid bisphenol A epoxy resin, including for example, liquid bisphenol A epoxy resin such as Huntsman GY6010, or a water-dispersed bisphenol A epoxy resin such as Resolution EPI-REZ 3510-W-60.

The hydraulic cement powder may be any type of Portland cement and may also be any color. Portland cement comes in Types I, II, III, IV, and V. The possible colors include white, grey, etc. In another embodiment, the hydraulic cement powder is a mixture of 0.50 to 0.95 weight parts of hydraulic cement, including Portland cement and/or calcium aluminate cement, and 0.05 to 0.50 weight parts pozzolan powder, including fly ash, steel slag, silica fume, calcined kaolin clay, or synthetic pozzolan. In another embodiment of the invention the pozzolan powder is included in the aqueous component of the two-part composition, and the hydraulic cement, including Portland cement and/or calcium aluminate cement, is included in the non-aqueous component of the two-part composition.

In another embodiment, the hydraulic cement powder is a mixture of approximately 0.70 to approximately 0.90 weight parts of Portland cement and/or calcium aluminate cement, and approximately 0.10 to approximately 0.30 weight parts pozzolan powder, wherein the pozzolan powder is included in the aqueous component of the two-part composition, and the Portland cement and/or calcium aluminate cement is included in the non-aqueous component of the two-part composition.

In an embodiment of the invention, the pozzolan powder is a white pozzolanic synthetic silica powder having an average particle diameter of approximately 8 microns.

The curing agent may be a substantially solvent free, or a water dilutable polyamine having a plurality of N-H linkages capable of reacting with the epoxy resin. The amine-based curing agent may be a polyoxyalkylene polyamine, arylene polyamine, cyclo-aliphatic polyamine, Mannich base, or a blend of two or more of these polyamines. An example of a solvent free amine curing agent used in an embodiment is a polyoxypropylene polyamine such as Huntsman JEFFAMINE D-400. Examples of commercially available water-based amine curing agents useful in the invention include, for example, Cognis WATERPOXY 751, UCB BECKOPOX 613, Huntsman ARADUR 39, Bakelite RUETADUR VE-51, and Air Products ANQUAMINE 287.

In an embodiment of the invention, the amine curing agent is Cognis WATERPOXY 751, in the range of 0.8 to 1.5 equivalents of total epoxy groups to 1.0 equivalent of reactive curing agent amine groups, preferably approximately 0.9 to approximately 1.2 equivalents of total epoxy groups to 1.0 equivalent of reactive curing agent amine groups, to produce a uniform final coating composition having a pH of approximately 8 and resulting in smooth blush-free coatings.

The coating compositions of the invention are prepared from a desired amount of epoxy resin such that the weight ratio of epoxy resin to hydraulic cement is in the range of approximately 0.1:1 to approximately 1.2:1; the compositions further provide a ratio of approximately 0.8 to 1.5 equivalents of total epoxy groups to 1.0 equivalent of reactive curing agent amine groups; and 0.2 to 0.9 parts water to 1.0 part hydraulic cement.

Up to approximately 3.3% by weight of a non-reactive diluent, based on the total composition, may be added to decrease the viscosity of the mixture to facilitate blending. Any diluent that does not react with the other elements of the composition and decreases viscosity may be used. In one embodiment, the non-reactive diluent is benzyl alcohol, which not only reduces viscosity, but also speeds the epoxy/amine reaction and helps prevent freezing or crystallization of the coating composition. In another embodiment, the non-reactive diluent is an aromatic hydrocarbon resin, such as Rütgers NOVARES LS 500 for example, which not only reduces viscosity, but also has lower volatility. The non-reactive diluent may be included in either or both components of the composition.

The composition may further include a reactive diluent. The reactive diluent may be an aliphatic, cycloaliphatic, or aromatic epoxy functional diluent. The reactive diluent may be either monofunctional or multifunctional. In one embodiment, the reactive diluent is a C6 to C18 alkyl mono glycidyl ether, and is included at a ratio of approximately 8 to 26 parts per 100 parts of epoxy resin. One example of a commercial reactive diluent suitable for this composition is Air Products EPODIL 748.

The non-aqueous part of the composition may further include 0.1 % to 1.1 %, preferably 0.2% to 1.0%, by weight of an organosilicon adhesion promoter to enhance the adhesion of the cured composition to the surface being coated. The organosilicon adhesion promoter is included in a ratio of approximately 0.5 to 2 parts per 100 parts of epoxy resin. In one embodiment, the organosilicon adhesion promoter is γ-glycidoxypropyl-trimethoxy silane.

The composition may further include a water-based latex resin in a ratio of up to approximately 1.2 parts water-based latex resin to 1.0 part of hydraulic cement. In an embodiment of the invention, the water-based latex resin comprises up to approximately 50% by weight of the aqueous part of the composition. Examples of useful water-based latex resins include, acrylic, styrene-acrylic, styrene butadiene rubber (SBR), polyvinyl acetate (PVA), and ethylene vinyl acetate (EVA) latexes. In one embodiment, the latex resin is an acrylic, styrene-acrylic, or styrene butadiene rubber (SBR) latex. Examples include Rohm & Haas RHOPLEX MC-1834, SYNTHOMER 29Y46 SBR, and Resolution IC-780.

The composition may further include a desired amount of pigment up to approximately 24.0% by weight in order to achieve the desired coating color. In an embodiment the pigment is titanium dioxide. The pigment may be dispersed in either component of the two-part composition of the invention.

The composition may further include a desired amount of at least one extender pigment up to approximately 8.7% by weight. In an embodiment the extender pigment is an industrial talc and is dispersed in the aqueous component of the two-part composition of the invention. Examples of industrial talc useful as extender pigments in the invention are NYTAL 300 from R.T. Vanderbilt Company, Inc, and VERTAL 7 and VERTAL 92 from Luzenac America, Inc. Further embodiments include one or more extender pigments including talc and/or barytes.

The composition may further include a desired amount of at least one colorant in an amount sufficient to obtain any desired color. In an embodiment of the composition the colorant is included in the aqueous component of the composition in an amount equivalent to approximately 8' ounces per 1 gallon of the aqueous component.

The composition may further include hollow spheres, as an inert filler, in an amount up to approximately 8.0% by weight. The hollow spheres may be dispersed in either component of the two-part composition of the invention. In one embodiment the hollow spheres are hollow micro-spheres having a particle diameter in the range of approximately 5 to 90 microns and are included in the hydraulic cement containing component of the two-part composition in a ratio of approximately 1 part hollow spheres to approximately 3 to 50 parts of hydraulic cement. Examples include 3M SCOTCHLITE K37 Glass Bubbles and CHL A-90 Hollow Ceramic Microspheres.

In an embodiment of the invention, the particle size distribution (by volume) of the hollow micro-spheres is 50% approximately 45 microns or less, 90% approximately 80 microns or less, and an effective top size of approximately 85 microns. It is expected that some of the larger diameter spheres will be crushed or broken in the process of application of the coating composition to a substrate surface.

The composition may further include a desired amount of at least one dispersant up to approximately 1.0% by weight of the total composition in order to achieve uniform dispersion of the solid mineral elements of the composition and to reduce the rate of settling of the solid mineral elements during storage. A dispersant may be included in either component or both components of the two-part composition of the invention. In one embodiment a non-aqueous dispersant is included in the non-aqueous component of the two-part composition. An exemplary non-aqueous dispersant is BYK Anti-Terra-U 100. In another embodiment an aqueous dispersant is included in the aqueous component of the two-part composition. An exemplary aqueous dispersant is Tamol 165A. In another embodiment a desired amount of a non-aqueous dispersant is included in the non-aqueous component of the two-part composition, and a desired amount of an aqueous dispersant is included in the aqueous component of the two-part composition, wherein the total amount of dispersant, including the aqueous dispersant plus the non-aqueous dispersant, is up to approximately 1.0% by weight of the total composition.

The composition may further include up to approximately 2.3% by weight of at least one defoamer. At least one defoamer may be included in either component or both components of the two-part composition of the invention. The defoamer may be a non-silicone defoamer, for example BYK-Chemie BYK-011; a silicone defoamer, for example Tego FOAMEX 805, BYK-Chemie BYK-022, BYK-Chemie BYK-024, and DeeFo 725E; and/or a combination of two or more of the foregoing, as more particularly shown in the examples below.

The composition may further include a desired amount of at least one leveling agent up to approximately 1.0% by weight of the total composition. In an embodiment of the composition, at least one leveling agent is included in the aqueous part of the two part composition, in order to improve uniformity and reduce surface tension for improved flow and level during application in order to prevent brush marks and pin holes, and to improve adhesion to the substrate. In an embodiment of the composition the leveling agent is Troy Corp. TROYSOL LAC at up to approximately 0.1 % by weight.

The composition may further include a desired amount of at least one rheology modifier up to approximately 1.0% by weight of the total composition in order to control settling of the components and to reduce slump or sag in the applied wet coating. A rheology modifier may be included in either or both parts of the two part composition. In an embodiment of the composition the rheology modifier included in the non-aqueous part of the two part composition includes a mixed mineral thixotrope, for example Southern Clay Products GARAMITE 1958, as a rheology modifier; and the aqueous part of the two part composition includes a hydrophobically modified nonionic polymer known as an "associative thickener," for example Southern Clay Products OPTIFLOW H600.

The aqueous component of the two part composition may further include up to approximately 0.6% of a cement plasticizer, such as a lignosulfonate salt, for example Lignotech Norlig 24C; and up to approximately 18.2% of a corrosion inhibitor, such as Cortec MCI-2000 or W. R. Grace DCI S; all as set forth in the following examples and claims.

Exemplary embodiments of the waterborne epoxy coating composition are divided into two parts, one aqueous and the other non-aqueous, for easy storage and transportation. The aqueous part is generally designated "Part A," and includes 30% to 60% by weight curing agent, preferably 34% to 52% by weight curing agent, water in a total amount sufficient to react with the hydraulic cement component included in the non-aqueous part, and desired amounts of other additives as described above and in the examples below. The non-aqueous part is generally designated "Part B," and includes 10% to 42% by weight epoxy resin, preferably 15% to 34% by weight epoxy resin, and more preferably 18% to 34% epoxy resin; 46% to 90% hydraulic cement powder, preferably 52% to 84% hydraulic cement powder, and more preferably 54% to 80% by weight hydraulic cement powder; and desired amounts of other additives as described above and in the examples below.

An embodiment of the waterborne epoxy coating composition comprises an aqueous Part A including water-based amine curing agent, deionized water, and defoamer; and a non-aqueous Part B including liquid Bisphenol A epoxy resin, reactive diluent, organosilicon adhesion promoter, hydraulic cement, and hollow spheres. The two parts are combined by adding Part A to Part B in any suitable container with mechanical agitation to substantially uniformly mix the two parts together, wherein the composition has a weight ratio of epoxy resin to hydraulic cement in the range of approximately 0.19:1 to approximately 0.6:1; a ratio of approximately 0.9 to 1.20 equivalents of total epoxy groups to 1.0 equivalent of reactive curing agent amine groups; and 0.3 to 0.6 parts total water to 1.0 part hydraulic cement. The substantially uniformly mixed composition is then applied to the surface to be coated using conventional painting equipment.

Another embodiment comprises an aqueous Part A including a water-based amine curing agent, deionized water, and defoamer; and, a non-aqueous Part B including liquid Bisphenol A epoxy resin, reactive diluent, organosilicon adhesion promoter, hydraulic cement, and hollow spheres. The two parts are combined by adding Part A to Part B in any suitable container with mechanical agitation to substantially uniformly mix the two parts together, wherein the final composition has a weight ratio of epoxy resin to hydraulic cement in the range of approximately 0.25:1 to approximately 0.5:1; a ratio of approximately 0.95 to 1.2 equivalents of total epoxy groups to 1.0 equivalent of reactive curing agent amine groups; and 0.4 to 0.6 parts total water to 1.0 part hydraulic cement. Each part is approximately equal in volume and additional water may be added after the two parts are mixed. The substantially uniformly mixed composition is then applied to the surface to be coated using conventional painting equipment.

Another embodiment comprises an aqueous Part A including a water-based amine curing agent, deionized water, dispersant, pigment, rheology modifier, leveling agent, and at least one defoamer; and a non-aqueous Part B including liquid Bisphenol A epoxy resin, reactive diluent, organosilicon adhesion promoter, hydraulic cement, dispersant, rheology modifier, defoamer, and hollow spheres. The two parts are combined by adding Part A to Part B in any suitable container with mechanical agitation to substantially uniformly mix the two parts together, wherein the final composition has a weight ratio of epoxy resin to hydraulic cement in the range of approximately 0.25:1 to approximately 0.5:1; a ratio of approximately 0.8 to 1.2 equivalents of total epoxy groups to 1.0 equivalent of reactive curing agent amine groups; and 0.25 to 0.45 parts water to 1.0 part hydraulic cement. Additional water may be added for thinning after the two parts are mixed. The substantially uniformly mixed composition is then applied to the surface to be coated using conventional painting equipment.

Another embodiment comprises an aqueous Part A including a water-based amine curing agent, deionized water, dispersant, pigment, rheology modifier, at least one pozzolan powder, at least one defoamer, and hollow spheres; and a non-aqueous Part B including liquid Bisphenol A epoxy resin, reactive diluent, organosilicon adhesion promoter, hydraulic cement, dispersant, rheology modifier, defoamer, and hollow spheres. The two parts are combined by adding Part A to Part B in any suitable container with mechanical agitation to substantially uniformly mix the two parts together, wherein the final composition has a weight ratio of epoxy resin to hydraulic cement in the range of approximately 0.25:1 to approximately 0.5:1; a ratio of approximately 0.8 to 1.3 equivalents of total epoxy groups to 1.0 equivalent of reactive curing agent amine groups; and 0.25 to 0.45 parts water to 1.0 part hydraulic cement. Additional water may be added for thinning after the two parts are mixed. The substantially uniformly mixed composition is then applied to the surface to be coated using conventional painting equipment.

In an alternative embodiment the aqueous Part A includes a water-dispersed epoxy resin, and may further contain a water-based latex resin, and defoamer; and the non-aqueous Part B includes a substantially solvent-free amine curing agent, hydraulic cement and hollow spheres. The two parts are combined by adding Part A to Part B in any suitable container with mechanical agitation to substantially uniformly mix the two parts together, wherein the composition has a weight ratio of epoxy resin to hydraulic cement in the range of approximately 0.1:1 to approximately 1.2:1; a ratio of approximately 0.8 to 1.3 equivalents of total epoxy groups to 1.0 equivalent of reactive curing agent amine groups; and 0.2 to 0.9 parts total water to 1.0 part hydraulic cement. The substantially uniformly mixed composition is then applied to the surface to be coated using conventional painting equipment.

The embodiments of the waterborne epoxy coating composition may be applied with a brush, roller, or airless sprayer to produce smooth, non-porous, cured coatings with a thickness from approximately 78% to approximately 95% of the single coat wet thickness. Exemplary embodiments of the composition applied by airless sprayer produce cured coatings with a thickness from approximately 90% to approximately 95% of the single coat wet thickness. Said cured coatings have a substantially uniform thickness up to approximately 20 mils, preferably having a thickness of approximately 3 mils to approximately 15 mils, more preferably having a thickness of approximately 4 mils to approximately 12 mils, and more preferably having a thickness of approximately 6 mils to approximately 10 mils. Single coat application thicknesses in the range of approximately 15 mils to approximately 20 mils are typically applied to rough or porous substrate surfaces such as masonry surfaces that are expected to be exposed to substantial abrasive wear or highly corrosive environmental conditions. Single coat application thicknesses in the range of approximately 4 mils to approximately 12 mils are typically applied to vertical ferrous or non-ferrous metal substrates. The embodiments of the composition exhibit gel times from approximately 60 minutes to approximately 120 minutes and are dry to touch in less than 24 hours.

Embodiments of the composition are more specifically shown in the following examples.

| **Examples** | | **1** | **2** | **3** |
|---|---|---|---|---|
| **Non-Aqueous Components** | | **Weight %** | **Weight %** | **Weight %** |
| Epoxy Resin | Huntsman GY6010 | 22.29 | 20.35 | 23.26 |
| Reactive Diluent | Air Products Epodil 748 | 2.50 | 2.29 | 2.61 |
| Adhesion Promoter | OSi Silquest A-187 | 0.25 | 0.23 | 0.26 |
| Cement | Lehigh Type I | 59.43 | 0 | 0 |
| | Lefarge Fondu | 0 | 66.43 | 50.32 |
| Pozzolan | Lefarge NewChem Slag | 0 | 0 | 16.70 |
| Titanium Dioxide | Huntsman TR-60 | 9.60 | 0 | 0 |
| Hollow Spheres | | 2.50 | 7.59 | 3.27 |
| Non-reactive Diluent | Benzyl Alcohol | 3.42 | 3.12 | 3.57 |
| **Total Non-Aqueous Part** | | **100.00** | **100.00** | **100.00** |

| **Aqueous Components** | | **Weight %** | **Weight %** | **Weight %** |
|---|---|---|---|---|
| Water-based amine curing agent | Cognis Waterpoxy 751 | 14.95 | 25.64 | 51.87 |
| | Anquamine 287 | 35.33 | 10.85 | 0 |
| Titanium Dioxide | Huntsman TR-60 | 0 | 27.82 | 0 |
| Concrete Super Plasticizer | Lignotech Norlig 24C | 0.57 | 0 | 0 |
| Latex Emulsion | Synthomer 29Y46 SBR | 48.61 | 0 | 0 |
| | Rohm & Haas Rhoplex MC-1834 | 0 | 35.28 | 0 |
| Non-reactive Diluent | Benzyl Alcohol | 0.55 | 0.40 | 0 |
| Deionized Water | | 0 | 0 | 29.95 |
| Corrosion Inhibitor | W.R. Grace DCI S | 0 | 0 | 18.18 |
| **Total Aqueous Part** | | **100.00** | **100.00** | **100.00** |

| **Examples** | **4** | **5** | **6** | **7** | **8** | **9** | **10** |
|---|---|---|---|---|---|---|---|
| **Non-Aqueous Components** | **Weight %** | **Weight %** | **Weight %** | **Weight %** | **Weight %** | **Weight %** | **Weight %** |
| Epoxy Resin: Huntsman GY6010 | 13.04 | 13.45 | 12.20 | 14.44 | 10.55 | 16.47 | 8.23 |
| Reactive Diluent: Air Products Epodil 748 | 1.46 | 1.51 | 1.37 | 1.62 | 1.19 | 1.85 | 0.92 |
| Adhesion Promoter: OSi Silquest A-187 | 0.15 | 0.15 | 0.14 | 0.16 | 0.12 | 0.19 | 0.09 |
| Cement: Lefarge Secar 71 | 35.82 | 37.44 | 38.90 | 34.12 | 43.08 | 26.68 | 42.67 |
| Pozzolan: Calcined Kaolin Imerys Metastar 450 | 7.18 | 3.74 | 7.78 | 2.73 | 10.77 | 1.33 | 21.34 |
| Hollow Spheres: 3M Scotchlite K37 | 2.34 | 2.42 | 2.19 | 2.60 | 1.90 | 2.96 | 1.48 |
| Non-reactive Diluent: Benzyl Alcohol | 2.00 | 2.07 | 1.87 | 2.22 | 1.62 | 2.53 | 1.26 |
| **Sub-total** | **61.99** | **60.78** | **64.45** | **57.89** | **69.23** | **52.01** | **75.99** |
| **Aqueous Components** | **Weight %** | **Weight %** | **Weight %** | **Weight %** | **Weight %** | **Weight %** | **Weight %** |
| Water-based amine curing agent: Cognis Waterpoxy 751 | 16.49 | 17.01 | 15.42 | 18.26 | 13.35 | 20.82 | 10.41 |
| Deionized Water | 4.74 | 4.90 | 4.44 | 5.26 | 3.84 | 5.99 | 3.00 |
| Latex Emulsion: Rohm & Haas Rhoplex MC-1834 | 16.27 | 16.78 | 15.22 | 18.02 | 13.17 | 20.54 | 10.27 |
| Non-reactive Diluent: Benzyl Alcohol | 0.18 | 0.19 | 0.17 | 0.20 | 0.15 | 0.23 | 0.12 |
| Defoamer: BYK-Chemie BYK-011 (non-silicone) | 0.33 | 0.34 | 0.31 | 0.36 | 0.26 | 0.41 | 0.21 |
| **Sub-total** | **38.01** | **39.22** | **35.56** | **42.10** | **30.77** | **47.99** | **24.01** |

| **Examples** | **11** | **12** | **13** | **14** | **15** | **16** | **17** |
|---|---|---|---|---|---|---|---|
| **Non-Aqueous Components** | **Weight %** | **Weight %** | **Weight %** | **Weight %** | **Weight %** | **Weight %** | **Weight %** |
| Epoxy Resin: Huntsman GY6010 | 11.48 | 13.16 | 11.74 | 12.82 | 10.43 | 14.86 | 8.53 |
| Reactive Diluent: Air Products Epodil 748 | 1.29 | 1.48 | 1.32 | 1.44 | 1.17 | 1.67 | 0.96 |
| Adhesion Promoter: OSi Silquest A-187 | 0.13 | 0.15 | 0.13 | 0.14 | 0.12 | 0.17 | 0.10 |
| Cement: Lefarge Secar 71 | 32.41 | 27.48 | 31.44 | 29.65 | 35.75 | 20.20 | 36.52 |
| Pozzolan: Fly Ash | 6.71 | 2.75 | 6.29 | 2.37 | 8.94 | 1.01 | 18.26 |
| Hollow Spheres: 3M Scotchlite K37 | 4.27 | 4.90 | 4.37 | 4.77 | 3.88 | 5.53 | 3.17 |
| Non-reactive Diluent: Benzyl Alcohol | 1.76 | 2.02 | 1.80 | 1.97 | 1.60 | 2.28 | 1.31 |
| Sub-total | 58.05 | 51.93 | 57.10 | 53.17 | 61.89 | 45.72 | 68.85 |

| **Aqueous Components** | **Weight %** | **Weight %** | **Weight %** | **Weight %** | **Weight %** | **Weight %** | **Weight %** |
|---|---|---|---|---|---|---|---|
| Water-based amine curing agent: Cognis Waterpoxy 751 | 14.52 | 16.64 | 14.85 | 16.21 | 13.19 | 18.79 | 10.78 |
| Deionized Water | 1.35 | 1.55 | 1.38 | 1.51 | 1.23 | 1.75 | 1.00 |
| Titanium Dioxide: Huntsman TR-60 | 11.3 | 12.95 | 11.55 | 12.61 | 10.26 | 14.62 | 8.39 |
| Latex Emulsion: Rohm & Haas Rhoplex MC-1834 | 14.33 | 16.42 | 14.65 | 16.00 | 13.02 | 18.54 | 10.64 |
| Non-reactive Diluent: Benzyl Alcohol | 0.16 | 0.19 | 0.17 | 0.18 | 0.15 | 0.21 | 0.12 |
| Defoamer: BYK-Chemie BYK-011 (non-silicone) | 0.29 | 0.33 | 0.29 | 0.32 | 0.26 | 0.37 | 0.21 |
| **Sub-total** | **41.95** | **48.07** | **42.90** | **46.83** | **38.11** | **54.28** | **31.15** |

| **Examples** | **18** | **19** | **20** | **21** | **22** | **23** | **24** |
|---|---|---|---|---|---|---|---|
| **Non-Aqueous Components** | **Weight %** | **Weight %** | **Weight %** | **Weight %** | **Weight %** | **Weight %** | **Weight %** |
| Epoxy Resin: Huntsman GY6010 | 13.20 | 13.85 | 12.62 | 14.81 | 10.99 | 16.76 | 8.73 |
| Reactive Diluent: Air Products Epodil 748 | 1.48 | 1.56 | 1.42 | 1.66 | 1.23 | 1.88 | 0.98 |
| Adhesion Promoter: OSi Silquest A-187 | 0.15 | 0.16 | 0.14 | 0.17 | 0.12 | 0.19 | 0.10 |
| Cement: Lefarge Fondu | 34.91 | 35.51 | 37.07 | 32.24 | 41.32 | 25.01 | 41.05 |
| Pozzolan: Lefarge NewChem Slag | 7.00 | 3.55 | 7.41 | 2.58 | 10.33 | 1.25 | 20.53 |
| Hollow Spheres: 3M Scotchlite K37 | 5.06 | 5.31 | 4.83 | 5.67 | 4.21 | 6.42 | 3.35 |
| Non-reactive Diluent: Benzyl Alcohol | 2.03 | 2.13 | 1.94 | 2.27 | 1.69 | 2.57 | 1.34 |
| **Sub-total** | **63.83** | **62.05** | **65.43** | **59.41** | **69.89** | **54.08** | **76.07** |

| **Aqueous Components** | **Weight %** | **Weight %** | **Weight %** | **Weight %** | **Weight %** | **Weight %** | **Weight %** |
|---|---|---|---|---|---|---|---|
| Water-based amine curing agent: Cognis Waterpoxy 751 | 16.07 | 16.86 | 15.36 | 18.03 | 13.38 | 20.40 | 10.63 |
| Deionized Water | 3.83 | 4.02 | 3.66 | 4.30 | 3.19 | 4.86 | 2.53 |
| Latex Emulsion: Synthomer 29Y46 SBR | 15.77 | 16.55 | 15.08 | 17.70 | 13.13 | 20.02 | 10.43 |
| Non-reactive Diluent: Benzyl Alcohol | 0.18 | 0.19 | 0.17 | 0.20 | 0.15 | 0.23 | 0.12 |
| Defoamer: BYK-Chemie BYK-011 (non-silicone) | 0.32 | 0.33 | 0.30 | 0.36 | 0.27 | 0.40 | 0.21 |
| **Sub-total** | **36.17** | **37.95** | **34.57** | **40.59** | **30.11** | **45.92** | **23.93** |

| **Examples** | **25** | **26** | **27** | **28** | **29** | **30** | **31** |
|---|---|---|---|---|---|---|---|
| **Non-Aqueous Components** | **Weight %** | **Weight %** | **Weight %** | **Weight %** | **Weight %** | **Weight %** | **Weight %** |
| Epoxy Resin: Huntsman GY6010 | 11.81 | 13.16 | 12.16 | 13.92 | 10.80 | 15.40 | 8.82 |
| Reactive Diluent: Air Products Epodil 748 | 1.33 | 1.48 | 1.37 | 1.56 | 1.21 | 1.73 | 0.99 |
| Adhesion Promoter: OSi Silquest A-187 | 0.13 | 0.15 | 0.14 | 0.16 | 0.12 | 0.17 | 0.10 |
| Cement: Lefarge Secar 71 White (Calcium Aluminate) | 33.32 | 29.83 | 31.59 | 26.78 | 35.90 | 20.33 | 36.65 |
| Pozzolan: Silica Fume | 6.66 | 2.98 | 6.32 | 2.14 | 8.97 | 1.02 | 18.32 |
| Hollow Spheres: 3M Scotchlite K37 | 1.81 | 2.01 | 1.86 | 2.13 | 1.65 | 2.36 | 1.35 |
| Non-reactive Diluent: Benzyl Alcohol | 1.81 | 2.02 | 1.87 | 2.14 | 1.66 | 2.37 | 1.35 |
| **Sub-total** | **56.87** | **51.63** | **55.30** | **48.83** | **60.31** | **43.37** | **67.58** |

| **Aqueous Components** | **Weight %** | **Weight %** | **Weight %** | **Weight %** | **Weight %** | **Weight %** | **Weight %** |
|---|---|---|---|---|---|---|---|
| Water-based amine curing agent: Cognis Waterpoxy 751 | 14.93 | 17.07 | 15.77 | 18.05 | 14.00 | 19.98 | 11.44 |
| Deionized Water | 1.39 | 0.65 | 0.61 | 0.69 | 0.54 | 0.77 | 0.44 |
| Titanium Dioxide: Huntsman TR-60 | 11.62 | 13.28 | 12.27 | 14.05 | 10.90 | 15.55 | 8.90 |
| Latex Emulsion: Rohm & Haas Rhoplex MC-1834 | 14.73 | 16.84 | 15.56 | 17.81 | 13.82 | 19.72 | 11.29 |
| Non-reactive Diluent: Benzyl Alcohol | 0.17 | 0.19 | 0.18 | 0.20 | 0.16 | 0.22 | 0.13 |
| Defoamer: BYK-Chemie BYK-011 (non-silicone) | 0.30 | 0.34 | 0.31 | 0.36 | 0.28 | 0.40 | 0.23 |
| **Sub-total** | **43.13** | **48.37** | **44.70** | **51.17** | **39.69** | **56.63** | **32.42** |

| **Examples** | **32** | **33** | **34** | **35** | **36** | **37** | **38** |
|---|---|---|---|---|---|---|---|
| **Non-Aqueous Components** | **Weight %** | **Weight %** | **Weight %** | **Weight %** | **Weight %** | **Weight %** | **Weight %** |
| Epoxy Resin: Huntsman GY6010 | 13.23 | 13.65 | 12.37 | 14.66 | 10.70 | 16.72 | 8.43 |
| Reactive Diluent: Air Products Epodil 748 | 1.49 | 1.53 | 1.39 | 1.65 | 1.20 | 1.88 | 0.95 |
| Adhesion Promoter: OSi Silquest A-187 | 0.15 | 0.15 | 0.14 | 0.16 | 0.12 | 0.19 | 0.09 |
| Portland Cement: Federal Type I | 35.89 | 37.53 | 38.98 | 34.20 | 43.16 | 26.75 | 42.49 |
| Pozzolan: Calcined Kaolin Imerys Metastar 450 | 7.20 | 3.75 | 7.80 | 2.74 | 10.79 | 1.34 | 21.25 |
| Hollow Spheres: 3M Scotchlite K37 | 1.93 | 1.99 | 1.80 | 2.13 | 1.56 | 2.43 | 1.23 |
| Non-reactive Diluent: Benzyl Alcohol | 2.03 | 2.10 | 1.90 | 2.25 | 1.64 | 2.57 | 1.29 |
| **Sub-total** | **61.92** | **60.70** | **64.38** | **57.79** | **69.18** | **51.87** | **75.73** |

| **Aqueous Components** | **Weight %** | **Weight %** | **Weight %** | **Weight %** | **Weight %** | **Weight %** | **Weight %** |
|---|---|---|---|---|---|---|---|
| Water-based amine curing agent: Cognis Waterpoxy 751 | 16.52 | 17.05 | 15.45 | 18.31 | 13.37 | 20.88 | 10.53 |
| Deionized Water | 4.76 | 4.91 | 4.45 | 5.27 | 3.85 | 6.01 | 3.03 |
| Latex Emulsion: Rohm & Haas Rhoplex MC-1834 | 16.30 | 16.82 | 15.25 | 18.06 | 13.19 | 20.60 | 10.39 |
| Non-reactive Diluent: Benzyl Alcohol | 0.18 | 0.19 | 0.17 | 0.20 | 0.15 | 0.23 | 0.12 |
| Defoamer: BYK-Chemie BYK-O11 (non-silicone) | 0.33 | 0.34 | 0.31 | 0.36 | 0.27 | 0.41 | 0.21 |
| **Sub-total** | **38.09** | **39.30** | **35.62** | **42.21** | **30.82** | **48.13** | **24.27** |

| **Examples** | **39** | **40** | **41** | **42** | **43** | **44** | **45** |
|---|---|---|---|---|---|---|---|
| **Non-Aqueous Components** | **Weight %** | **Weight %** | **Weight %** | **Weight %** | **Weight %** | **Weight %** | **Weight %** |
| Epoxy Resin: Huntsman GY6010 | 13.07 | 13.49 | 12.23 | 14.49 | 10.58 | 16.52 | 8.33 |
| Reactive Diluent: Air Products Epodil 748 | 1.47 | 1.52 | 1.37 | 1.63 | 1.19 | 1.86 | 0.94 |
| Adhesion Promoter: OSi Silquest A-187 | 0.15 | 0.15 | 0.14 | 0.16 | 0.12 | 0.19 | 0.09 |
| Portland Cement: Federal Type I | 35.91 | 37.55 | 39.00 | 34.23 | 43.18 | 26.77 | 42.51 |
| Pozzolan: Lefarge NewChem Slag | 7.20 | 3.75 | 7.80 | 2.74 | 10.79 | 1.34 | 21.25 |
| Hollow Spheres: 3M Scotchlite K37 | 2.08 | 2.14 | 1.94 | 2.30 | 1.68 | 2.63 | 1.32 |
| Non-reactive Diluent: Benzyl Alcohol | 2.01 | 2.07 | 1.88 | 2.22 | 1.62 | 2.54 | 1.28 |
| **Sub-total** | **61.89** | **60.68** | **64.36** | **57.77** | **69.16** | **51.83** | **75.72** |

| **Aqueous Components** | **Weight %** | **Weight %** | **Weight %** | **Weight %** | **Weight %** | **Weight %** | **Weight %** |
|---|---|---|---|---|---|---|---|
| Water-based amine curing agent: Cognis Waterpoxy 751 | 16.53 | 17.06 | 15.46 | 18.32 | 13.37 | 20.89 | 10.53 |
| Deionized Water | 4.76 | 4.91 | 4.45 | 5.27 | 3.85 | 6.01 | 3.03 |
| Latex Emulsion: Rohm & Haas Rhoplex MC-1834 | 16.31 | 16.83 | 15.25 | 18.07 | 13.20 | 20.61 | 10.39 |
| Non-reactive Diluent: Benzyl Alcohol | 0.18 | 0.19 | 0.17 | 0.20 | 0.15 | 0.23 | 0.12 |
| Defoamer: BYK-Chemie BYK-O11 (non-silicone) | 0.33 | 0.34 | 0.31 | 0.36 | 0.27 | 0.41 | 0.21 |
| **Sub-total** | **38.11** | **39.32** | **35.64** | **42.23** | **30.84** | **48.17** | **24.28** |

| **Examples** | **46** | **47** | **48** | **49** | **50** | **51** | **52** |
|---|---|---|---|---|---|---|---|
| **Non-Aqueous Components** | **Weight %** | **Weight %** | **Weight %** | **Weight %** | **Weight %** | **Weight %** | **Weight %** |
| Epoxy Resin: Huntsman GY6010 | 13.11 | 13.53 | 12.26 | 14.53 | 10.60 | 16.58 | 8.34 |
| Reactive Diluent: Air Products Epodil 748 | 1.47 | 1.52 | 1.38 | 1.63 | 1.19 | 1.86 | 0.94 |
| Adhesion Promoter: OSi Silquest A-187 | 0.15 | 0.15 | 0.14 | 0.16 | 0.12 | 0.19 | 0.09 |
| Portland Cement: Federal Type I | 36.02 | 37.66 | 39.10 | 34.33 | 43.28 | 26.86 | 42.58 |
| Pozzolan: Silica Fume | 7.22 | 3.77 | 7.82 | 2.75 | 10.82 | 1.34 | 21.29 |
| Hollow Spheres: 3M Scotchlite K37 | 1.80 | 1.86 | 1.68 | 2.00 | 1.46 | 2.28 | 1.15 |
| Non-reactive Diluent: Benzyl Alcohol | 2.01 | 2.08 | 1.88 | 2.23 | 1.63 | 2.55 | 1.28 |
| **Sub-total** | **61.78** | **60.56** | **64.26** | **57.64** | **69.09** | **51.66** | **75.68** |

| **Aqueous Components** | **Weight %** | **Weight %** | **Weight %** | **Weight %** | **Weight %** | **Weight %** | **Weight %** |
|---|---|---|---|---|---|---|---|
| Water-based amine curing agent: Cognis Waterpoxy 751 | 16.58 | 17.11 | 15.50 | 18.38 | 13.41 | 20.97 | 10.55 |
| Deionized Water | 4.77 | 4.92 | 4.46 | 5.29 | 3.86 | 6.03 | 3.04 |
| Latex Emulsion: Rohm & Haas Rhoplex MC-1834 | 16.36 | 16.88 | 15.29 | 18.13 | 13.23 | 20.69 | 10.41 |
| Non-reactive Diluent: Benzyl Alcohol | 0.18 | 0.19 | 0.17 | 0.20 | 0.15 | 0.23 | 0.12 |
| Defoamer: BYK-Chemie BYK-011 (non-silicone) | 0.33 | 0.34 | 0.31 | 0.36 | 0.27 | 0.42 | 0.21 |
| **Sub-total** | **38.22** | **39.44** | **35.74** | **42.36** | **30.91** | **48.34** | **24.32** |

| **Examples** | **53** | **54** | **55** | **56** | **57** | **58** | **59** |
|---|---|---|---|---|---|---|---|
| **Non-Aqueous Components** | **Weight %** | **Weight %** | **Weight %** | **Weight %** | **Weight %** | **Weight %** | **Weight %** |
| Epoxy Resin: Huntsman GY6010 | 12.12 | 13.51 | 12.49 | 14.29 | 11.09 | 15.81 | 9.62 |
| Reactive Diluent: Air Products Epodil 748 | 1.36 | 1.52 | 1.40 | 1.61 | 1.25 | 1.73 | 1.08 |
| Adhesion Promoter: OSi Silquest A-187 | 0.14 | 0.15 | 0.14 | 0.16 | 0.12 | 0.18 | 0.11 |
| Portland Cement: Type I | 39.58 | 32.67 | 37.76 | 28.80 | 44.72 | 21.23 | 58.20 |
| Hollow Spheres: 3M Scotchlite K37 | 2.28 | 2.54 | 2.35 | 2.68 | 2.08 | 2.97 | 1.81 |
| Non-reactive Diluent: Benzyl Alcohol | 1.86 | 2.07 | 1.92 | 2.19 | 1.70 | 2.43 | 1.48 |
| **Sub-total** | **57.34** | **52.46** | **56.06** | **49.73** | **60.97** | **44.39** | **72.29** |

| **Aqueous Components** | **Weight %** | **Weight %** | **Weight %** | **Weight %** | **Weight %** | **Weight %** | **Weight %** |
|---|---|---|---|---|---|---|---|
| Water-based amine curing agent: Anquamine 287 | 4.63 | 5.16 6 | 4.77 | 5.45 | 4.23 | 6.03 | 3.01 |
| Water-based amine curing agent: Waterpoxy 751 | 10.93 | 12.18 | 11.26 | 12.89 | 10.00 | 14.26 | 7.10 |
| Titanium Dioxide: Huntsman TR-60 | 11.86 | 13.22 | 12.22 | 13.98 | 10.85 | 15.47 | 7.71 |
| Latex Emulsion: Synthomer 29Y46 SBR | 15.05 | 16.77 | 15.50 | 17.73 | 13.77 | 19.61 | 9.77 |
| Non-reactive Diluent: Benzyl Alcohol | 0.17 | 0.19 | 0.18 | 0.20 | 0.16 | 0.22 | 0.11 |
| Corrosion Inhibitor: Cortec MCI-2000 | 0.02 | 0.02 | 0.02 | 0.02 | 0.02 | 0.02 | 0.01 |
| **Sub-total** | **42.66** | **47.54** | **43.94** | **50.27** | **39.03** | **55.61** | **27.71** |

| **Examples** | **60** | **61** | **62** | **63** | **64** | **65** | **66** |
|---|---|---|---|---|---|---|---|
| **Non-Aqueous Components** | **Weight %** | **Weight %** | **Weight %** | **Weight %** | **Weight %** | **Weight %** | **Weight %** |
| Reactive Diluent: Air Products Epodil 748 | 1.42 | 1.30 | 1.53 | 1.36 | 1.47 | 1.38 | 1.45 |
| Epoxy Resin: Huntsman GY6010 | 12.61 | 11.57 | 13.61 | 12.09 | 13.12 | 12.30 | 12.91 |
| Adhesion Promoter: OSi Silquest A-187 | 0.14 | 0.13 | 0.15 | 0.14 | 0.15 | 0.14 | 0.15 |
| Dispersant: BYK Anti-Terra-U 100 | 0.44 | 0.40 | 0.47 | 0.42 | 0.46 | 0.43 | 0.45 |
| Defoamer (silicone): BYK-024 | 0.95 | 0.87 | 1.03 | 0.91 | 0.99 | 0.93 | 0.98 |
| Portland Cement: Type I | 36.47 | 33.46 | 39.37 | 34.98 | 37.93 | 35.58 | 37.35 |
| Pozzolan: VCAS-8 White Synthetic Pozzolan | 4.05 | 3.72 | 4.37 | 3.89 | 4.21 | 3.95 | 4.15 |
| Non-reactive Diluent: Benzyl Alcohol | 2.35 | 2.16 | 2.54 | 2.26 | 2.45 | 2.29 | 2.41 |
| Hollow Spheres: 3M Scotchlite K37 | 1.06 | 0.97 | 1.15 | 1.02 | 1.10 | 1.04 | 1.09 |
| **Sub-total** | **59.49** | **54.58** | **64.22** | **57.07** | **61.88** | **58.04** | **60.94** |

| **Aqueous Components** | **Weight %** | **Weight %** | **Weight %** | **Weight %** | **Weight %** | **Weight %** | **Weight %** |
|---|---|---|---|---|---|---|---|
| Water-based amine curing agent: Waterpoxy 751 | 15.87 | 17.79 | 14.01 | 16.82 | 14.93 | 16.44 | 15.30 |
| Deionized Water | 7.24 | 8.12 | 6.39 | 7.67 | 6.81 | 7.50 | 6.98 |
| Dispersant: Tamol 165A | 0.13 | 0.15 | 0.11 | 0.14 | 0.12 | 0.13 | 0.12 |
| Titanium Dioxide: Huntsman TR-60 | 16.19 | 18.15 | 14.30 | 17.16 | 15.24 | 16.77 | 15.61 |
| Defoamer (silicone): DeeFo 725E | 0.73 | 0.82 | 0.65 | 0.78 | 0.69 | 0.76 | 0.71 |
| Defoamer (silicone): BYK-022 | 0.29 | 0.33 | 0.26 | 0.31 | 0.28 | 0.30 | 0.28 |
| Leveling Agent: Troysol LAC | 0.05 | 0.06 | 0.05 | 0.06 | 0.05 | 0.06 | 0.05 |
| **Sub-total** | **40.5** | **45.42** | **35.77** | **42.94** | **38.12** | **41.96** | **39.05** |

| **Examples** | **67** | **68** | **69** | **70** | **71** | **72** | **73** |
|---|---|---|---|---|---|---|---|
| **Non-Aqueous Components** | **Weight %** | **Weight %** | **Weight %** | **Weight %** | **Weight %** | **Weight %** | **Weight %** |
| Reactive Diluent: Air Products Epodil 748 | 1.46 | 1.34 | 1.57 | 1.40 | 1.51 | 1.42 | 1.49 |
| Epoxy Resin: Huntsman GY6010 | 12.98 | 11.95 | 13.96 | 12.47 | 13.47 | 12.68 | 13.28 |
| Rheology Modifier: Garamite 1958 | 0.31 | 0.28 | 0.33 | 0.30 | 0.32 | 0.30 | 0.31 |
| Adhesion Promoter: OSi Silquest A-187 | 0.15 | 0.13 | 0.16 | 0.14 | 0.15 | 0.14 | 0.15 |
| Dispersant: BYK Anti-Terra-U 100 | 0.45 | 0.42 | 0.49 | 0.43 | 0.47 | 0.44 | 0.46 |
| Defoamer (silicone): BYK-024 | 0.98 | 0.90 | 1.05 | 0.94 | 1.02 | 0.96 | 1.00 |
| Portland Cement: Type I | 37.53 | 34.57 | 40.36 | 36.07 | 38.96 | 36.66 | 38.39 |
| Pozzolan: VCAS-8 White Synthetic Pozzolan | 4.17 | 3.84 | 4.48 | 4.01 | 4.33 | 4.07 | 4.27 |
| Non-reactive Diluent: Benzyl Alcohol | 2.42 | 2.23 | 2.60 | 2.33 | 2.51 | 2.36 | 2.48 |
| Hollow Spheres: 3M Scotchlite K37 | 1.02 | 0.94 | 1.10 | 0.98 | 1.06 | 1.00 | 1.04 |
| **Sub-total** | **61.47** | **56.6** | **66.1** | **59.07** | **63.8** | **60.03** | **62.87** |

| **Aqueous Components** | **Weight %** | **Weight %** | **Weight %** | **Weight %** | **Weight %** | **Weight %** | **Weight %** |
|---|---|---|---|---|---|---|---|
| Water-based amine curing agent: Waterpoxy 751 | 15.00 | 16.88 | 13.20 | 15.93 | 14.09 | 15.55 | 14.45 |
| Dispersant: Tamol 165A | 0.12 | 0.14 | 0.11 | 0.13 | 0.11 | 0.13 | 0.12 |
| Defoamer (silicone): BYK-022 | 0.28 | 0.31 | 0.24 | 0.29 | 0.26 | 0.29 | 0.27 |
| Titanium Dioxide: Huntsman TR-60 | 15.30 | 17.23 | 13.46 | 16.26 | 14.37 | 15.87 | 14.74 |
| Defoamer (silicone): DeeFo 725E | 0.69 | 0.78 | 0.61 | 0.74 | 0.65 | 0.72 | 0.67 |
| Deionized Water | 6.84 | 7.70 | 6.02 | 7.27 | 6.43 | 7.10 | 6.59 |
| Rheology Modifier: Optiflow H600 | 0.25 | 0.28 | 0.22 | 0.26 | 0.23 | 0.25 | 0.24 |
| Leveling Agent: Troysol LAC | 0.05 | 0.06 | 0.05 | 0.05 | 0.05 | 0.05 | 0.05 |
| **Sub-total** | **38.53** | **43.38** | **33.91** | **40.93** | **36.19** | **39.96** | **37.13** |

Further embodiments of the composition are described by the following examples wherein the waterborne epoxy coating composition is prepared by combining one part by volume of Part A with one part by volume of Part B.

| **Examples** | **74** | **75** | **76** | **77** | **78** | **79** | **80** |
|---|---|---|---|---|---|---|---|
| **Part A Components** | **Weight %** | **Weight %** | **Weight %** | **Weight %** | **Weight %** | **Weight %** | **Weight %** |
| Water-based amine curing agent: Waterpoxy 751 | 18.98 | 19.61 | 18.36 | 20.02 | 17.95 | 21.08 | 16.93 |
| Deionized Water | 1.94 | 2.00 | 1.87 | 2.04 | 1.83 | 2.15 | 1.73 |
| Dispersant: Tamol 165A | 0.25 | 0.26 | 0.24 | 0.26 | 0.24 | 0.28 | 0.22 |
| Rheology Modifier: Optiflow H600 | 0.31 | 0.32 | 0.30 | 0.33 | 0.29 | 0.34 | 0.28 |
| Defoamer (silicone): BYK-022 | 0.33 | 0.34 | 0.32 | 0.35 | 0.31 | 0.36 | 0.29 |
| Titanium Dioxide: Huntsman TR-60 | 15.49 | 16.00 | 14.99 | 16.35 | 14.65 | 17.20 | 13.82 |
| Talc extender pigment: Nytal 300 | 1.94 | 2.00 | 1.87 | 2.04 | 1.83 | 2.15 | 1.73 |
| Deionized Water | 4.80 | 4.96 | 4.65 | 5.07 | 4.54 | 5.33 | 4.28 |
| Defoamer (silicone): DeeFo 725E | 0.55 | 0.57 | 0.53 | 0.58 | 0.52 | 0.61 | 0.49 |
| Hollow Spheres: 3M Scotchlite K37 | 0.76 | 0.79 | 0.74 | 0.81 | 0.72 | 0.85 | 0.68 |
| **Sub-total** | **45.35** | **46.85** | **43.87** | **47.85** | **42.88** | **50.35** | **40.45** |

| **Part B Components** | **Weight %** | **Weight %** | **Weight %** | **Weight %** | **Weight %** | **Weight %** | **Weight %** |
|---|---|---|---|---|---|---|---|
| Reactive Diluent: Air Products Epodil 748 | 2.01 | 1.95 | 2.06 | 1.92 | 2.10 | 1.82 | 2.19 |
| Epoxy Resin: Huntsman GY6010 | 18.07 | 17.58 | 18.56 | 17.25 | 18.89 | 16.42 | 19.69 |
| Rheology Modifier: Garamite 1958 | 0.31 | 0.31 | 0.32 | 0.30 | 0.33 | 0.28 | 0.34 |
| Dispersant: BYK Anti-Terra-U 100 | 0.42 | 0.41 | 0.43 | 0.40 | 0.44 | 0.38 | 0.46 |
| Adhesion Promoter: OSi Silquest A-187 | 0.15 | 0.14 | 0.15 | 0.14 | 0.16 | 0.14 | 0.16 |
| Defoamer (silicone): BYK-024 | 1.00 | 0.97 | 1.03 | 0.95 | 1.04 | 0.91 | 1.09 |
| Portland Cement: Type I | 29.00 | 28.21 | 29.78 | 27.68 | 30.31 | 26.34 | 31.60 |
| Pozzolan: VCAS-8 White Synthetic Pozzolan | 3.22 | 3.13 | 3.31 | 3.08 | 3.37 | 2.93 | 3.51 |
| Non-reactive Diluent: Benzyl Alcohol | 0.09 | 0.09 | 0.10 | 0.09 | 0.10 | 0.09 | 0.10 |
| Hollow Spheres: 3M Scotchlite K37 | 0.37 | 0.36 | 0.38 | 0.36 | 0.39 | 0.34 | 0.41 |
| **Sub-total** | **54.64** | **53.15** | **56.12** | **52.17** | **57.13** | **49.65** | **59.55** |

| **Examples** | **81** | **82** | **83** | **84** | **85** | **86** | **87** |
|---|---|---|---|---|---|---|---|
| **Part A Components** | **Weight %** | **Weight** | **Weight** | **Weight** | **Weight %** | **Weight** | **Weight** |
| Water-based amine curing agent: Waterpoxy 751 | 19.33 | 21.50 | 17.21 | 20.41 | 18.26 | 19.98 | 18.69 |
| Defoamer (silicone): BYK-022 | 0.33 | 0.37 | 0.30 | 0.35 | 0.32 | 0.35 | 0.32 |
| Titanium Dioxide | 8.28 | 9.22 | 7.37 | 8.75 | 7.83 | 8.56 | 8.01 |
| Talc extender pigment: Vertal 92 | 5.27 | 5.86 | 4.69 | 5.56 | 4.98 | 5.44 | 5.09 |
| Talc extender pigment: Nytal 300 | 2.52 | 2.81 | 2.25 | 2.67 | 2.39 | 2.61 | 2.44 |
| Deionized Water | 6.73 | 7.48 | 5.99 | 7.10 | 6.35 | 6.95 | 6.50 |
| Rheology Modifier: Optiflow H600 | 0.32 | 0.35 | 0.28 | 0.33 | 0.30 | 0.33 | 0.31 |
| Defoamer (silicone): DeeFo 725E | 0.88 | 0.98 | 0.79 | 0.93 | 0.83 | 0.91 | 0.85 |
| Hollow Spheres: 3M Scotchlite K37 | 0.78 | 0.86 | 0.69 | 0.82 | 0.73 | 0.80 | 0.75 |
| **Sub-total** | **44.44** | **49.44** | **39.56** | **46.93** | **41.99** | **45.93** | **42.97** |

| **Part B Components** | **Weight %** | **Weight %** | **Weight %** | **Weight %** | **Weight %** | **Weight %** | **Weight %** |
|---|---|---|---|---|---|---|---|
| Reactive Diluent: Air Products Epodil 748 | 2.04 | 1.86 | 2.22 | 1.95 | 2.14 | 1.99 | 2.10 |
| Epoxy Resin: Huntsman GY6010 | 18.4 | 16.75 | 20.02 | 17.58 | 19.22 | 17.91 | 18.89 |
| Rheology Modifier: Garamite 1958 | 0.32 | 0.29 | 0.35 | 0.31 | 0.33 | 0.31 | 0.33 |
| Dispersant: BYK Anti-Terra-U 100 | 0.43 | 0.39 | 0.47 | 0.41 | 0.45 | 0.42 | 0.44 |
| Adhesion Promoter: OSi Silquest A-187 | 0.15 | 0.14 | 0.16 | 0.14 | 0.16 | 0.15 | 0.16 |
| Defoamer (silicone): BYK-024 | 1.02 | 0.93 | 1.11 | 0.97 | 1.06 | 0.99 | 1.05 |
| Portland Cement: Type I | 29.53 | 26.88 | 32.13 | 28.21 | 30.84 | 28.74 | 30.32 |
| Pozzolan: VCAS-8 White Synthetic Pozzolan | 3.28 | 2.99 | 3.57 | 3.13 | 3.43 | 3.19 | 3.37 |
| Hollow Spheres: 3M Scotchlite K37 | 0.38 | 0.35 | 0.41 | 0.36 | 0.40 | 0.37 | 0.39 |
| **Sub-total** | **55.56** | **50.56** | **60.44** | **53.07** | **58.01** | **54.07** | **57.03** |

| **Examples** | **88** | **89** | **90** | **91** | **92** | **93** | **94** |
|---|---|---|---|---|---|---|---|
| **Part A Components** | **Weight %** | **Weight %** | **Weight %** | **Weight %** | **Weight %** | **Weight %** | **Weight %** |
| Water-based amine curing agent: Waterpoxy 751 | 17.93 | 19.78 | 16.08 | 18.85 | 17.00 | 18.48 | 17.37 |
| Defoamer (silicone): BYK-022 | 0.31 | 0.34 | 0.28 | 0.33 | 0.29 | 0.32 | 0.30 |
| Titanium Dioxide | 15.36 | 16.95 | 13.79 | 16.16 | 14.57 | 15.84 | 14.89 |
| Talc extender pigment: Vertal 7 | 4.88 | 5.39 | 4.38 | 5.14 | 4.63 | 5.04 | 4.73 |
| Barytes extender pigment | 2.34 | 2.58 | 2.10 | 2.46 | 2.22 | 2.41 | 2.27 |
| Deionized Water | 6.54 | 7.22 | 5.87 | 6.88 | 6.21 | 6.75 | 6.34 |
| Rheology Modifier: Optiflow H600 | 0.29 | 0.32 | 0.26 | 0.31 | 0.28 | 0.30 | 0.28 |
| Defoamer (silicone): DeeFo 725E | 0.82 | 0.90 | 0.74 | 0.86 | 0.78 | 0.84 | 0.79 |
| **Sub-total** | **48.48** | **53.49** | **43.50** | **50.98** | **45.99** | **49.98** | **46.98** |

| **Part B Components** | **Weight %** | **Weight %** | **Weight %** | **Weight %** | **Weight %** | **Weight %** | **Weight %** |
|---|---|---|---|---|---|---|---|
| Reactive Diluent: Air Products Epodil 748 | 1.90 | 1.71 | 2.08 | 1.80 | 1.99 | 1.84 | 1.95 |
| Epoxy Resin: Huntsman GY6010 | 17.06 | 15.41 | 18.71 | 16.24 | 17.89 | 16.57 | 17.56 |
| Rheology Modifier: Garamite 1958 | 0.30 | 0.27 | 0.32 | 0.28 | 0.31 | 0.29 | 0.30 |
| Dispersant: BYK Anti-Terra-U 100 | 0.40 | 0.36 | 0.44 | 0.38 | 0.42 | 0.39 | 0.41 |
| Adhesion Promoter: OSi Silquest A-187 | 0.14 | 0.13 | 0.15 | 0.13 | 0.15 | 0.14 | 0.14 |
| Defoamer (silicone): BYK-024 | 0.94 | 0.85 | 1.04 | 0.90 | 0.99 | 0.92 | 0.97 |
| Portland Cement: Type I | 27.39 | 24.72 | 30.03 | 26.06 | 28.71 | 26.59 | 28.18 |
| Pozzolan: VCAS-8 White Synthetic Pozzolan | 3.04 | 2.75 | 3.34 | 2.90 | 3.19 | 2.95 | 3.13 |
| Hollow Spheres: 3M Scotchlite K37 | 0.35 | 0.32 | 0.39 | 0.34 | 0.37 | 0.34 | 0.36 |
| **Sub-total** | **51.52** | **46.51** | **56.50** | **49.02** | **54.01** | **50.02** | **53.02** |

| **Examples** | **95** | **96** |
|---|---|---|
| **Part A Components** | **Weight %** | **Weight %** |
| Water-based amine curing agent: Waterpoxy 751 | 16.53 | 16.80 |
| Defoamer (silicone): BYK-022 | 0.32 | 0.32 |
| Titanium Dioxide | 15.78 | 15.74 |
| Pozzolan: VCAS-8 White Synthetic Pozzolan | 3.76 | 11.24 |
| Deionized Water | 6.68 | 6.16 |
| Rheology Modifier: Optiflow H600 | 0.30 | 0.30 |
| Defoamer (silicone): DeeFo 725E | 0.84 | 0.84 |
| Hollow Spheres: 3M Scotchlite K37 | 0.99 | 0.00 |
| **Sub-total** | **45.21** | **51.39** |

| **Part B Components** | **Weight %** | **Weight %** |
|---|---|---|
| Reactive Diluent: Air Products Epodil 748 | 1.77 | 1.77 |
| Epoxy Resin: Huntsman GY6010 | 15.56 | 15.75 |
| Rheology Modifier: Garamite 1958 | 0.28 | 0.28 |
| Adhesion Promoter: OSi Silquest A-187 | 0.18 | 0.18 |
| Dispersant: BYK Anti-Terra-U 100 | 0.41 | 0.41 |
| Defoamer (silicone): BYK-024 | 0.59 | 0.88 |
| Portland Cement: Type I | 33.82 | 26.24 |
| Non-reactive Diluent: Benzyl Alcohol | 2.18 | 2.18 |
| Hollow Spheres: 3M Scotchlite K37 | 0.00 | 0.94 |
| **Sub-total** | **54.79** | **48.61** |

Further embodiments of the composition are described by the following untested examples. The following examples are provided by way of illustration not limitation, and the changes reflected are equally applicable to each of the compositions specifically described in Examples 1 through 96.

| **Untested Examples** | | **97** | **98** | **99** | **100** | **101** | **102** |
|---|---|---|---|---|---|---|---|
| **Non-Aqueous Components** | | **Weight %** | **Weight %** | **Weight %** | **Weight %** | **Weight %** | **Weight %** |
| Epoxy Resin | Huntsman GY6010 | 14.31 | 13.04 | 13.04 | 11.48 | 12.12 | 12.61 |
| Reactive Diluent | Air Products Epodil 748 | 1.61 | 1.46 | 1.46 | 1.29 | 1.36 | 1.42 |
| Adhesion Promoter | OSi Silquest A-187 | 0.16 | 0.15 | 0.15 | 0.13 | 0.14 | 0.14 |
| Dispersant | BYK Anti-Terra-U 100 | 0 | 0 | 0 | 0 | 0 | 0.44 |
| Defoamer | Silicone | 0 | 0 | 0 | 0 | 0 | 0.95 |
| Portland Cement | Type | 38.15 | 0 | 0 | 0 | 39.58 | 36.47 |
| | Type V | 0 | 35.82 | 35.82 | 32.41 | 0 | 0 |
| Pozzolan | Calcined Kaolin | 0 | 7.18 | 7.18 | 0 | 0 | 0 |
| | Fly Ash | 0 | 0 | 0 | 6.71 | 0 | 0 |
| | White Synthetic | 0 | 0 | 0 | 0 | 0 | 4.05 |
| Titanium Dioxide | Huntsman TR-60 | 6.16 | 0 | 0 | 0 | 0 | 1.06 |
| Hollow Spheres | | 1.61 | 2.34 | 2.34 | 4.27 | 2.28 | 0 |
| Non-reactive Diluent | Rutgers Novares LS 500 | 2.20 | 2.00 | 2.00 | 1.76 | 1.86 | 0 |
| | Benzyl Alcohol | 0 | 0 | 0 | 0 | 0 | 2.35 |
| **Sub-total** | | **64.19** | **61.99** | **61.99** | **58.06** | **57.34** | **59.49** |

| **Aqueous Components** | | **Weight %** | **Weight %** | **Weight %** | **Weight %** | **Weight %** | **Weight %** |
|---|---|---|---|---|---|---|---|
| Water-based amine curing agent | Cognis Waterpoxy 751 | 5.35 | 16.49 | 16.49 | 14.52 | 10.93 | 15.87 |
| | Anquamine 287 | 12.65 | 0 | 0 | 0 | 4.63 | 0 |
| Deionized Water | | | 4.74 | 4.74 | 1.35 | 0 | 7.24 |
| Dispersant | Tamol 165A | 0 | 0 | 0 | 0 | 0 | 0.13 |
| Titanium Dioxide | Huntsman TR-60 | 0 | 0 | 0 | 11.30 | 11.86 | 16.19 |
| Concrete Super Plasticizer | Lignotech Norlig 24C | 0.20 | 0 | 0 | 0 | 0 | 0 |
| Latex Emulsion | Synthomer 29Y46 SBR | 17.41 | 0 | 0 | 0 | 15.05 | 0 |
| | Rohm & Haas Rhoplex MC-1834 | 0 | 16.27 | 16.27 | 14.33 | 0 | 0 |
| Non-reactive Diluent | Benzyl Alcohol | 0 | 0.18 | 0 | 0 | 0 | 0 |
| | Rutgers Novares LS 500 | 0.2 | 0 | 0.18 | 0.16 | 0.17 | 0 |
| Defoamer | BYK-Chemie BYK-011 (non-silicone) | 0 | 0 | 0.16 | 0 | 0 | 0 |
| | BYK-022 (silicone) | 0 | 0 | 0 | 0 | 0 | 0.29 |
| | DeeFo 725E (silicone) | 0 | 0 | 0 | 0 | 0 | 0.73 |
| | Tego Foamex 805 (silicone) | 0 | 0.33 | 0.17 | 0.29 | 0 | 0 |
| Leveling Agent | Troysol LAC | 0 | 0 | 0 | 0 | 0 | 0.05 |
| Corrosion Inhibitor | Cortec MCI-2000 | 0 | 0 | 0 | 0 | 0.02 | 0 |
| **Sub-total** | | **35.81** | **38.01** | **38.01** | **41.94** | **42.66** | **40.5** |

| **Untested Examples** | | **103** | **104** |
|---|---|---|---|
| **Non-Aqueous Components** | | **Weight %** | **Weight %** |
| Liquid Amine Resin | Huntsman Jeffamine D-400 | 14.45 | 14.45 |
| Portland Cement | Lehigh Type I | 42.01 | 42.01 |
| Hollow Spheres | Scotchlite K-37 Glass Bubbles | 2.41 | 0 |
| **Sub-total** | | **58.86** | **56.46** |

| **Aqueous Components** | | **Weight %** | **Weight %** |
|---|---|---|---|
| Water-dispersed Epoxy Resin | Resolution Epi-Rez 3510-W-60 | 41.14 | 41.14 |
| Titanium Dioxide | Huntsman TR-60 | 0 | 2.41 |
| **Sub-total** | | **41.14** | **43.55** |

Any of the disclosed embodiments of the composition may be used in a process to protectively coat a surface in its entirety with a smooth, non-porous, self-leveling, substantially aggregate free, thin film coating to protect, enhance, and beautify structural surfaces such as masonry building structures, ferrous metal structures, and non-ferrous metal structures, in industries including food and beverage processing, water and wastewater processing, power generation, pulp and paper, pharmaceutical and biotech, industrial process manufacturing, and water tanks. A wide variety of colors may be mixed into the composition, and the smooth non-porous coating covers both vertical and horizontal surfaces with a slump resistant, substantially uniform thickness coating that protects from corrosion and water penetration. The process involves preparing the two-part composition according to the present invention, mixing the two parts with an appropriate amount of water, and applying the coating to the surface. The non-structural coating is typically applied without troweling to substantially all of the substrate to be protected. The formula may be applied with a brush, roller, or airless sprayer and will achieve a high build film in a single application, although multiple coats may be applied at the discretion of the user.

Of critical significance, the embodiments of the claimed coating composition have flow characteristics and physical properties necessary to provide coating compositions capable of smooth, slump resistant, thin film application to large vertical surfaces using an airless sprayer to achieve a high build film in a single application. Accordingly, the inorganic components of the composition, including the hydraulic cement, the pigment, and the hollow spheres are powders having particle diameter up to approximately 90 microns.

Thus, a waterborne epoxy composition is disclosed which utilizes hydraulic cement powder as an element of the epoxy composition to provide a desired initial application coat thickness with good fluidity and enhanced cure time while still providing protection against corrosion and other environmental threats. The coating composition also provides corrosion resistance equal to organic solvent based and solvent free epoxy coatings.

While preferred embodiments and particular applications of this invention have been shown and described, it is apparent to those skilled in the art that many other modifications and applications of this invention are possible, including using the teaching to develop coating compositions having three or more components, without departing from the inventive concepts herein. It is, therefore, to be understood that, within the scope of the appended claims, this invention may be practiced otherwise than as specifically described, and the invention is not to be restricted except in the spirit of the appended claims. Though some of the features of the invention may be claimed in dependency, each feature has merit if used independently.

## Claims

1. A composition for use in coating surfaces, the composition comprising:
(a) a first component including:
(i) 30% to 60% by weight of a curing agent; and
(b) a second component including:
(i) 10% to 42% by weight of an epoxy resin; and
(ii) 46% to 90% by weight of hydraulic cement powder; and
(c) water in an amount at least sufficient to react with the amount of hydraulic cement powder in the second component; and
(d) the first component, water, and the second component being combinable to provide a substantially aggregate-free coating composition, wherein the coating composition forms smooth, non-porous, non-structural coatings in a single coat having a thickness of approximately 20 mils or less.

2. The composition according to claim 1, wherein the hydraulic cement powder is Portland Cement.

3. The composition according to claim 1, wherein the hydraulic cement powder is a calcium aluminate cement.

4. The composition according to claim 1, wherein the hydraulic cement powder is a mixture of 0.5 to 0.95 weight parts of Portland Cement and 0.05 to 0.5 weight parts pozzolan powder.

5. The composition according to claim 1, wherein the curing agent is a polyamine having a plurality of N-H linkages capable of reacting with the epoxy resin.

6. The composition according to claim 1, wherein the composition has a pH of approximately 8 and produces smooth, blush-free coatings.

7. The composition according to claim 1, wherein the second component further includes a reactive diluent comprising a mono glycidyl ether, at a ratio of approximately 8 to approximately 26 parts reactive diluent per 100 parts of epoxy resin.

8. The composition according to claim 1, wherein the second component further includes 0.1 % to 1.1 % by weight of an organosilicon adhesion promoter.

9. The composition according to claim 1, wherein the composition further includes up to approximately 8% by weight, based on the total composition, of hollow spheres having a diameter up to approximately 90 microns.

10. A two-component composition for use in coating surfaces, the composition comprising:
(a) an aqueous first component including:
(i) at least one curing agent, wherein the curing agent is a polyamine having a plurality of reactive N-H linkages; and;
(ii) water; and
(b) a non-aqueous second component including:
(i) at least one epoxy resin; and
(ii) at least one powdered hydraulic cement; and
(iii) the weight ratio of epoxy resin to hydraulic cement is in the range 0.1:1 to 1.2:1; and
wherein the first component and the second component are combined in a ratio to provide a non-structural coating composition having 0.2 to 0.9 parts water to 1 part of hydraulic cement.

11. A two-component composition for use in coating surfaces, the composition comprising:
(a) an aqueous first component including:
(i) at least one curing agent, wherein the curing agent is a polyamine having a plurality of reactive N-H linkages; and
(ii) water; and
(b) a non-aqueous second component including:
(i) at least one epoxy resin;
(ii) at least one powdered hydraulic cement; and
(iii) the weight ratio of epoxy resin to hydraulic cement is in the range 0.1:1 to 1.2:1; and
wherein the first component and the second component are combined in a ratio to provide a paint composition having 0.8 to 1.5 equivalents of total epoxy groups to 1 equivalent of reactive amine groups.

12. A two-component composition for use in coating surfaces, the composition comprising:
(a) a first component including:
(i) at least one curing agent, wherein the curing agent is a polyamine having a plurality of reactive N-H linkages;
(ii) at least one water-based latex resin; and
(iii) water; and
(b) a second component including:
(i) at least one epoxy resin;
(ii) at least one powdered hydraulic cement; and
(iii) the weight ratio of epoxy resin to hydraulic cement is in the range 0.1:1 to 1.2:1; and
(c) the total amount of water in the first component being present in an amount at least sufficient to react with the amount of hydraulic cement powder in the second component; and
(d) the first component and the second component being combined in a ratio to provide a paint composition having 0.15 to 1.2 parts water-based latex resin to 1 part of hydraulic cement.

13. A two-component paint composition for use in coating surfaces, the composition comprising:
(a) a first component including:
(i) at least one curing agent, wherein the curing agent is a polyamine having a plurality of reactive N-H linkages;
(ii) water;
(iii) at least one pigment;
(iv) at least one extender pigment;
(v) at least one silicone defoamer; and
(vi) at least one rheology modifier; and
(b) a second component including:
(i) at least one epoxy resin;
(ii) at least one reactive diluent;
(iii) at least one rheology modifier;
(iv) at least one organosilicon adhesion promoter;
(v) at least one non-aqueous dispersant;
(vi) at least one silicone defoamer;
(vii) at least one powdered hydraulic cement;
(viii) at least one synthetic pozzolan; and
(ix) at least one type of hollow spheres; and
(c) the first component and the second component being combinable to provide the paint composition wherein the final composition has a weight ratio of epoxy resin to hydraulic cement in the range of approximately 0.25:1 to approximately 0.5:1; a ratio of approximately 0.8 to 1.3 equivalents of total epoxy groups to 1 equivalent of reactive curing agent amine groups; and approximately 0.25 to approximately 0.6 parts water to 1 part hydraulic cement.

14. The composition according to claim 13, wherein one part by volume of the first component is combinable with one part by volume of the second component.

15. A two-component paint composition for use in coating surfaces, the composition comprising:
(a) a first component including:
(i) at least one curing agent, wherein the curing agent is a polyamine having a plurality of reactive N-H linkages;
(ii) water;
(iii) at least one pigment;
(iv) at least one synthetic pozzolan;
(v) at least one silicone defoamer;
(vi) at least one rheology modifier; and
(vii) at least one type of hollow spheres; and
(b) a second component including:
(i) at least one epoxy resin;
(ii) at least one reactive diluent;
(iii) at least one rheology modifier;
(iv) at least one organosilicon adhesion promoter;
(v) at least one non-aqueous dispersant;
(vi) at least one silicone defoamer;
(vii) at least one powdered hydraulic cement;
(viii) at least one non-reactive diluent; and
(ix) at least one type of hollow spheres; and
(c) the first component and the second component being combinable to provide the paint composition wherein the final composition has a weight ratio of epoxy resin to hydraulic cement in the range of approximately 0.25:1 to approximately 0.5:1; a ratio of approximately 0.8 to 1.3 equivalents of total epoxy groups to 1 equivalent of reactive curing agent amine groups; and approximately 0.25 to approximately 0.6 parts water to 1 part hydraulic cement.

16. The composition according to claim 15, wherein one part by volume of the first component is combinable with one part by volume of the second component.

17. A process for protecting a surface, the process comprising:
(a) preparing a fluid protective coating composition, the coating composition comprising:
(i) at least one epoxy resin;
(ii) at least one powdered hydraulic cement;
(iii) at least one curing agent in an amount sufficient to react with the epoxy resin; and
(iv) water in an amount at least sufficient to react with the powdered hydraulic cement; and
(b) applying the fluid protective coating composition to a surface; and
(c) permitting the coating composition to cure to form a smooth, non-porous, protective coating with a thickness of approximately 20 mils or less.

18. The process according to claim 17, wherein preparing and applying the fluid protective coating composition further includes:
(a) mixing at least one curing agent, wherein the curing agent is a polyamine having a plurality of N-H linkages capable of reacting with the epoxy resin, with water to form a first component of said composition;
(b) separately mixing approximately 90 parts epoxy resin with approximately 10 parts reactive diluent; and
(c) mixing approximately 1 part hydraulic cement powder with approximately 0.11 to 1.2 parts of the epoxy resin and reactive diluent mixture to form a second component of said composition;
(d) combining the first component and the second component, in a ratio to provide a coating composition having 0.8 to 1.5 equivalents of total epoxy groups to 1 equivalent of reactive amine groups, and approximately 0.25 to approximately 0.6 parts water to 1 part hydraulic cement, in a container with mechanical agitation to thoroughly mix the composition;
(e) transferring the combined coating composition to an airless sprayer; and
(f) spraying the coating composition onto a structural surface to form a smooth, non-porous, protective coating with a thickness of from approximately 2 mils to approximately 20 mils.

19. The process according to claim 18, wherein the water is added to the coating composition after combining the first component and the second component.

20. The process according to claim 18, wherein the coating composition is applied to a large vertical surface to form a smooth, non-porous, protective, total-surface coating with a thickness of from approximately 6 mils to approximately 10 mils.
